# EUROPÄISCHE PATENTANMELDUNG

(11) **EP 2 336 647 A2**
(43) Veröffentlichungstag der Anmeldung: **22.06.2011**
(21) Anmeldenummer: 10192492.6
(22) Anmeldetag: 25.11.2010
(51) Int. Cl.: F24C 15/10, A47J 37/06

(54) **Grillaufsatz für ein Gaskochfeld**

(30) Priorität: 31.12.2009 ES 200931313; 17.12.2009 EP 09382284
(71) Anmelder: BSH Bosch und Siemens Hausgeräte GmbH, 81739 München (DE)
(72) Erfinder: Aguado Vela, Cesar, 39600, Camargo (ES); Alonso Susilla, Jose Luis, 39120, Liencres (ES); Diez Marquina, Silvia, 39011, Santander (ES); Herrera Ruiz, Alfonso, 39600, Maliaño (Cantabria) (ES); Jimenez-Eguizabal Mota, Armando, 39700, Castro Urdiales (ES); Ortubia Nogues, Fco. Javier, 39011, Santander (ES)

(57) **Zusammenfassung**

Gegenstand der Erfindung ist ein Grillaufsatz für eine Gaskochstelle, umfassend mindestens einen Topfträger (7) und mindestens eine auf den Topfträger (7) aufsetzbare Grillplatte (1), sowie ein Positionierungsmittel (8) zum Festlegen der Position der auf den Topfträger (7) aufgesetzten Grillplatte (1) in zumindest einer horizontalen Richtung. Erfindungsgemäß ist das Positionierungsmittel (8) von dem Topfträger (7) gebildet. Das Positionierungsmittel (8) ist vorzugsweise derart ausgeführt, dass das Positionierungsmittel (8) die Position der auf den Topfträger (7) aufgesetzten Grillplatte (1) in genau drei horizontale Richtungen festgelegt. Bevorzugt ist das Positionierungsmittel (8) von mindestens einer Erhöhung des Topfträgers (9, 9a) gebildet.

## Beschreibung

Die Erfindung betrifft einen Grillaufsatz für eine Gaskochstelle, umfassend mindestens einen Topfträger und mindestens eine auf den Topfträger aufsetzbare Grillplatte, sowie ein Positionierungsmittel zum Festlegen der Position der auf den Topfträger aufgesetzten Grillplatte in zumindest einer horizontalen Richtung.

Gaskochstellen der oben erwähnten Art sind in erster Linie zum Beheizen von Gargutbehältern, wie z.B. Töpfen oder Pfannen, ausgelegt. Die Gaskochstellen weisen hierzu einen oder mehrere Gasbrenner auf. Im Bereich jedes Gasbrenners befindet sich ein Topfträger, dessen Oberseite als Topfaufstandsfläche ausgebildet ist. Ein auf der Topfaufstandsfläche stehender Gargutbehälter befindet sich mit geringem Abstand genau oberhalb des Gasbrenners, so dass er in effizienter Weise mit den am Gasbrenner brennenden Gasflammen aufgeheizt werden kann.

Die Grillplatte eines gattungsgemäßen Grillaufsatzes bildet ein Zubehör für eine solche Gaskochstelle. Mit dem Grillaufsatz kann die Gaskochstelle als Grill betrieben werden. Das Gargut, beispielsweise Fleisch, Fisch oder Gemüse, wird dabei direkt auf die Grillplatte aufgelegt und ohne Gargutbehälter gegart. Gattungsgemäß wird die Grillplatte hierzu auf den Topfträger aufgesetzt. Es handelt sich dabei um denselben Topfträger, der während des normalen Betriebs der Gaskochstelle ohne Grillplatte den zu beheizenden Gargutbehälter trägt. Beheizt wird die Grillplatte mittels des mindestens einen unter der Grillplatte befindlichen Gasbrenners.

Die Grillplatte ist häufig als massive Platte ausgeführt, beispielsweise aus Gusseisen oder aus Aluminium. Die gute Wärmeleitfähigkeit des verwendeten Materials gewährleistet eine gleichmäßige Wärmeverteilung auf der Oberseite der Grillplatte. Insbesondere auch aufgrund des hohen Gewichts der Grillplatte ist ein Positionierungsmittel vorgesehen, das gewährleistet, dass die Grillplatte jederzeit korrekt über dem Gasbrenner positioniert ist und vor Herunterfallen gesichert ist.

Der vorliegenden Erfindung liegt daher die Aufgabe zugrunde, einen Grillaufsatz mit einem möglichst einfach gestalteten Positionierungsmittel zur Verfügung zu stellen, mit denen die Grillplatte besonders gut gegen Herunterfallen geschützt ist.

Diese Aufgabe wird erfindungsgemäß dadurch gelöst, dass das Positionierungsmittel von dem Topfträger gebildet ist. Der Topfträger ist derart ausgebildet, dass er die Position der Grillplatte eindeutig festlegt. Gleichzeitig sichert das Positionierungsmittel am Topfträger die Grillplatte vor unbeabsichtigtem Verrutschen und damit gegen Herunterfallen von der Gaskochstelle. Der Topfträger bildet das Positionierungsmittel vollständig, so dass die Grillplatte als einfache Platte ausgeführt sein kann und keine besonderen Gestaltungsmerkmale besitzt, die Teil des Positionierungsmittels sind.

Mit besonderem Vorteil ist das Positionierungsmittel derart ausgeführt, dass das Positionierungsmittel die Position der auf den Topfträger aufgesetzten Grillplatte in genau drei horizontale Richtungen festgelegt. Das Aufsetzen oder Abnehmen der Grillplatte erfolgt in der horizontalen Richtung, in der das Positionierungsmittel die Position der Grillplatte nicht festlegt. Das Aufsetzen oder Abnehmen der Grillplatte ist hierdurch erleichtert. Dennoch ist die korrekte Position der Grillplatte exakt definiert.

Eine besonders günstige Ausführung ergibt sich, wenn das Positionierungsmittel von mindestens einer Erhöhung des Topfträgers gebildet ist. Die Erhöhung bildet einen Anschlag für die Grillplatte und legt so die Position der Grillplatte in zumindest eine horizontale Richtung fest. Wenn mehrere Erhöhungen vorgesehen sind, kann die Position der Grillplatte in jede horizontale Richtung und auch bezüglich einer Rotation um eine vertikale Achse festgelegt sein.

Hierbei ist es zweckmäßig, wenn der Topfträger eine Topfaufstandsfläche aufweist, welche die Gewichtskraft der auf dem Topf aufgesetzten Grillplatte aufnimmt, und das Positionierungsmittel von mindestens einer Erhöhung des Topfträgers gebildet ist, welche über die Topfaufstandsfläche nach oben hervorsteht.

Hierbei ist es möglich, dass der Topfträger mehrere im Wesentlichen horizontal ausgerichtete Finger aufweist, die ein freies Ende und ein an einem Rahmen des Topfträgers befestigtes Ende aufweisen und die Topfaufstandsfläche von den Oberseiten der Finger gebildet sind. Die Finger sind dabei mit ihrem äußeren Ende an dem Rahmen des Topfträgers befestigt und ragen nach innen in Richtung des Gasbrenners.

Bevorzugt ist die mindestens eine Erhöhung im Bereich des an dem Rahmen des Topfträgers befestigten Endes des Fingers angeordnet. Die Erhöhungen befinden sich damit an den äußeren Enden der Finger.

Mit besonderem Vorteil ist das Positionierungsmittel seitlich außerhalb der Kontur der auf dem Topfträger aufgesetzten Grillplatte angeordnet. Die Erhöhungen befinden sich damit neben der Grillplatte und sind auch bei aufgesetzter Grillplatte sichtbar. Damit kann die korrekte Positionierung der Grillplatte relativ zu dem Positionierungsmittel von der Bedienperson der Gaskochstelle jederzeit optisch überprüft werden.

Die auf den Topfträger aufgesetzte Grillplatte liegt mit einer seitlichen, vorderen und/oder hinteren Außenkontur an dem Positionierungsmittel an. Die Grillplatte kann somit nicht in Richtung des Positionierungsmittels verschoben werden. Wenn auf jeder Seite der Grillplatte mindestens ein Positionierungsmittel vorgesehen ist, ist die Position der Grillplatte auf dem Topfträger eindeutig festgelegt.

Zweckmäßigerweise ist die Grillplatte von einer im Wesentlichen geschlossenen Metallplatte gebildet. Die Grillplatte weist damit keine Öffnungen auf, die zum Festlegen der Positionen der Grillplatte verwendet werden können.

Weiter ist es vorteilhaft, wenn eine Unterseite der Grillplatte eben ausgeführt ist. Es besteht folglich keine Möglichkeit, an der Unterseite der Grillplatte horizontal ausgerichtete Kräfte aufzunehmen und so die Position der Grillplatte in horizontaler Richtung festzulegen.

Eine Oberseite der Grillplatte ist vorzugsweise gerippt ausgeführt. Diese gerippte Ausführung der Oberseite stellt sicher, dass das Gargut nicht vollflächig, sondern nur abschnittsweise auf der Grillplatte aufliegt. Hierdurch ist ein Ankleben des Garguts auf der Grillplatte verhindert. Darüber hinaus können die Zwischenräume zwischen den Rippen der Grillplatte flüssiges Fett und andere während des Garens auftretende Flüssigkeiten aufnehmen und von dem Gargut abführen.

Gegenstand der Erfindung ist auch eine Gaskochstelle mit einer Grillplatte, wobei zum Beheizen der Grillplatte mindestens ein unter der Grillplatte angeordneter Gasbrenner vorgesehen ist. Um eine größere Grillplatte zu beheizen, können auch zwei unter der Grillplatte vorhandene Gasbrenner beheizt werden.

Alternativ kann mindestens ein Gasbrenner vorgesehen sein, der eine unrunde, vorzugsweise eine ovale oder eine längliche Form aufweist. Auf diese Weise kann mittels eines einzigen Gasbrenners ein sich in länglicher Richtung erstreckender Bereich der Grillplatte annähernd gleichmäßig beheizt werden.

Weitere Vorteile und Einzelheiten der Erfindung werden anhand des in den schematischen Figuren dargestellten Ausführungsbeispiels näher erläutert. Dabei zeigt
- Figur 1: eine Grillplatte,
- Figur 2: einen Ausschnitt einer Gaskochstelle mit einem Topfträger,
- Figur 3: die Gaskochstelle mit aufgesetzter Grillplatte,
- Figur 4: die Gaskochstelle mit teilweise angehobener Grillplatte.

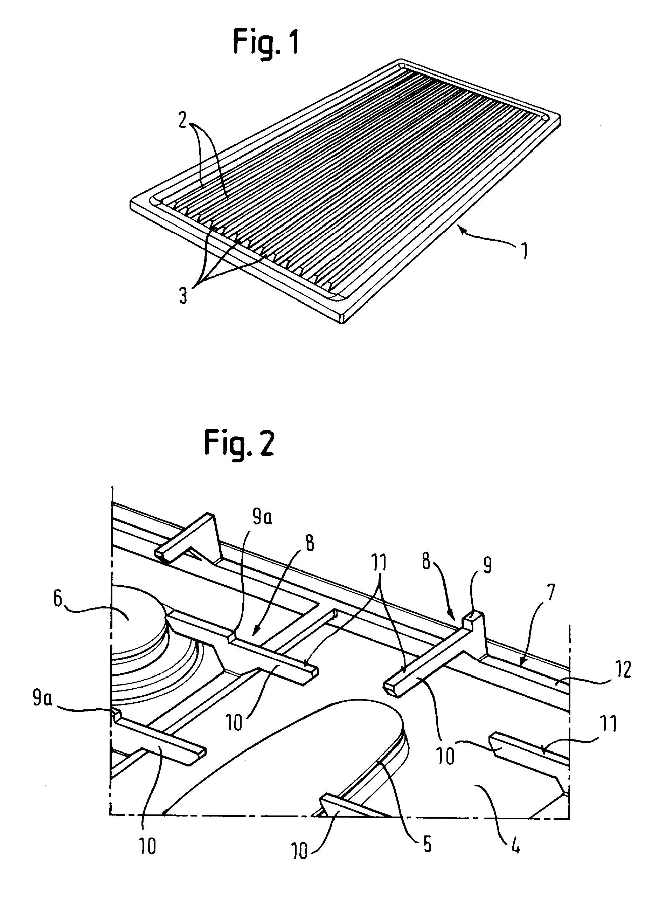

Figur 1 zeigt eine Grillplatte 1, die zu einem Grillaufsatz für eine Gaskochstelle gehört. Die Grillplatte 1 besitzt die Form einer im Wesentlichen rechteckigen Platte. Eine Oberseite der Grillplatte 1 weist Rippen 2 und Vertiefungen 3 auf. Gargut wird zum Garen direkt auf die Oberseite der Grillplatte 1 gelegt. Das Gargut befindet sich dabei ausschließlich mit den Oberseiten der Rippen 2 in Kontakt. Aus dem Gargut austretende Flüssigkeiten sammeln sich in den Vertiefungen 3 und befinden sich dadurch nicht in Kontakt mit dem Gargut. Eine Unterseite der Grillplatte 1 ist im Wesentlichen eben ausgeführt.

Figur 2 zeigt einen Ausschnitt einer Gaskochstelle mit einem Topfträger 7. Der Topfträger 7 ist ebenfalls Bestandteil des Grillaufsatzes. Die Grillplatte 1 ist in Figur 2 nicht dargestellt. Der Topfträger 7 steht auf einer Kochfeldplatte 4 der Gaskochstelle auf und ist gegenüber der Kochfeldplatte 4 mit geeigneten Mitteln gegen Verrutschen gesichert. Zum Beheizen der Grillplatte 1 ist ein im vorliegenden Ausführungsbeispiel länglich ausgeführter Gasbrenner 5 vorgesehen, der an der Kochfeldplatte 4 montiert ist. Zu erkennen ist auch ein weiterer Gasbrenner 6, der zum Beheizen von Gargutbehältern ausgeführt ist. In dem dem Gasbrenner 5 zugeordneten Abschnitt weist der Topfträger 7 mehrere Finger 10 auf, die sich ausgehend von einem äußeren umlaufenden Rahmen 12 in Richtung des Gasbrenners 5 erstrecken. Die Oberseiten der Finger 10 bilden Topfaufstandsflächen 11. Auf diesen Topfaufstandsflächen 11 kann ein zum Gasbrenner 5 passender länglicher Gargutbehälter abgestellt werden, so dass er sich mit geringem Abstand über dem Gasbrenner 5 befindet und mit diesem beheizt werden kann.

Alternativ kann die Grillplatte 1 auf die Topfaufstandsflächen 11 der Finger 10 aufgelegt werden. Zu diesem Zweck weist der Topfträger 7 Positionierungsmittel 8 auf, welche geeignet sind, die Position der Grillplatte 1 relativ zu dem Topfträger 7 zu definieren und die Grillplatte 1 zumindest in bestimmte Richtungen gegen Verrutschen zu sichern. Das Positionierungsmittel 8 ist von mehreren Erhöhungen 9, 9a gebildet, die an den dem Rahmen 12 zugewandten Enden der Finger 10 angeordnet sind. Die Erhöhungen 9, 9a ragen über die Topfaufstandsfläche 11 hinaus. Mindestens eine Erhöhung 9a geht direkt in einen dem weiteren Gasbrenner 6 zugeordneten Finger über, wobei die Oberseite dieses Fingers auf dem Niveau der Oberseite der Erhöhung 9 liegt.

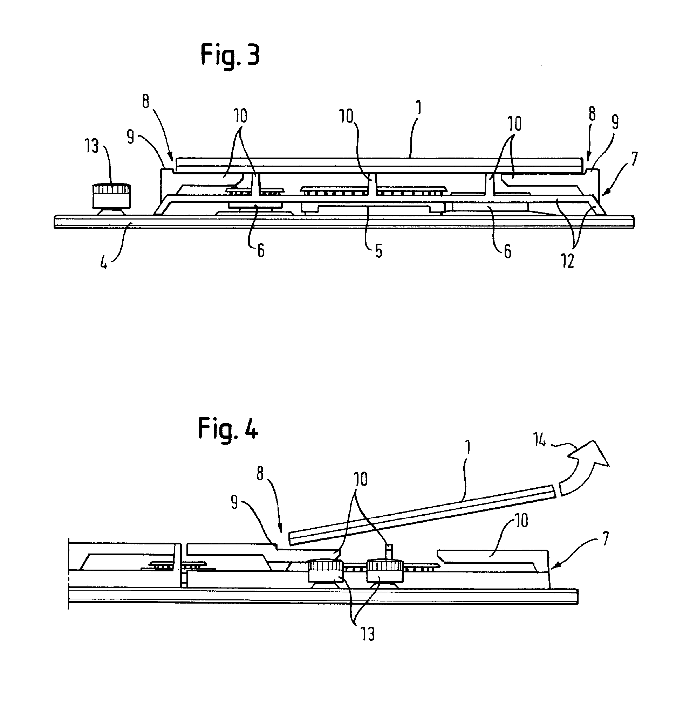

Figur 3 zeigt die Gaskochstelle mit aufgesetzter Grillplatte 1 in einer Ansicht von der Seite der Gaskochstelle. Zu erkennen ist, wie die Grillplatte 1 direkt über dem Gasbrenner 5 angeordnet ist. Die Steuerung der Gaszufuhr zu dem Gasbrenner 5 erfolgt mittels eines als Drehknebel ausgeführten Bedienelements 13, das im vorderen Bereich der Kochfeldplatte 4 angeordnet ist. Die Erhöhungen 9 des Positionierungsmittels 8 definieren die Lage der Grillplatte 1 nach vorne in Richtung des Bedienelements 13 und auch nach hinten. Der Abstand der Erhöhungen 9 ist dabei nur geringfügig größer als die Länge der Grillplatte 1, so dass die Grillplatte 1 mit ihrer vorderen und ihrer hinteren Außenkontur an den jeweiligen Erhöhungen 9 anliegt.

Figur 4 zeigt die Gaskochstelle mit teilweise angehobener Grillplatte 1 in einer Ansicht von vorne. Die Position der Grillplatte 1 ist zur linken Seite hin durch eine zum Positionierungsmittel 8 gehörende Erhöhung 9 festlegbar. Zur rechten Seite hin ist hingegen kein Element des Positionierungsmittels 8 vorgesehen. Dies erleichtert ein Aufsetzen und ein Abnehmen der Grillplatte 1 auf bzw. von dem Topfträger 7. Hierbei greift eine Bedienperson die Grillplatte 1 an deren rechter Seite und hebt die Grillplatte 1 an dieser Seite an, während die linke Seite der Grillplatte 1 auf dem Topfträger 7 aufliegt.
Die Richtung 14, in der die Grillplatte vorzugsweise von dem Topfträger 7 abgenommen wird, ist in der Figur 4 als Pfeil eingezeichnet.

### Bezugszeichenliste

- 1: Grillplatte
- 2: Rippen
- 3: Vertiefungen
- 4: Kochfeldplatte
- 5: Gasbrenner
- 6: weiterer Gasbrenner
- 7: Topfträger
- 8: Positionierungsmittel
- 9, 9a: Erhöhung
- 10: Finger
- 11: Topfaufstandsfläche
- 12: Rahmen
- 13: Bedienelement
- 14: Richtung

## Patentansprüche

1. Grillaufsatz für eine Gaskochstelle, umfassend mindestens einen Topfträger (7) und mindestens eine auf den Topfträger (7) aufsetzbare Grillplatte (1), sowie ein Positionierungsmittel (8) zum Festlegen der Position der auf den Topfträger (7) aufgesetzten Grillplatte (1) in zumindest einer horizontalen Richtung, **dadurch gekennzeichnet, dass** das Positionierungsmittel (8) von dem Topfträger (7) gebildet ist.

2. Grillaufsatz für eine Gaskochstelle nach Anspruch 1, **dadurch gekennzeichnet, dass** das Positionierungsmittel (8) derart ausgeführt ist, dass das Positionierungsmittel (8) die Position der auf den Topfträger (7) aufgesetzten Grillplatte (1) in genau drei horizontale Richtungen festgelegt.

3. Grillaufsatz für eine Gaskochstelle nach Anspruch 1 oder 2, **dadurch gekennzeichnet, dass** das Positionierungsmittel (8) von mindestens einer Erhöhung des Topfträgers (9, 9a) gebildet ist.

4. Grillaufsatz für eine Gaskochstelle nach einem der Ansprüche 1 bis 3, **dadurch gekennzeichnet, dass** der Topfträger (7) eine Topfaufstandsfläche (11) aufweist, welche die Gewichtskraft der auf den Topfträger (7) aufgesetzten Grillplatte (1) aufnimmt, und das Positionierungsmittel (8) von mindestens einer Erhöhung des Topfträgers (9, 9a) gebildet ist, welche über die Topfaufstandsfläche (11) nach oben hervorsteht.

5. Grillaufsatz für eine Gaskochstelle nach Anspruch 4, **dadurch gekennzeichnet, dass** der Topfträger (7) mehrere im Wesentlichen horizontal ausgerichtete Finger (10) aufweist, die ein freies Ende und ein an einem Rahmen (12) des Topfträgers (7) befestigtes Ende aufweisen und die Topfaufstandsfläche (11) von den Oberseiten der Finger (10) gebildet sind.

6. Grillaufsatz für eine Gaskochstelle nach Anspruch 5, **dadurch gekennzeichnet, dass** die mindestens eine Erhöhung (9, 9a) im Bereich des an dem Rahmen (12) des Topfträgers (7) befestigten Ende des Fingers (10) angeordnet ist.

7. Grillaufsatz für eine Gaskochstelle nach einem der Ansprüche 1 bis 6, **dadurch gekennzeichnet, dass** das Positionierungsmittel (8) seitlich außerhalb der Kontur der auf den Topfträger (7) aufgesetzten Grillplatte (1) angeordnet ist.

8. Grillaufsatz für eine Gaskochstelle nach einem der Ansprüche 1 bis 7, **dadurch gekennzeichnet, dass** die auf dem Topfträger (7) aufgesetzte Grillplatte (1) mit einer seitlichen, vorderen und/oder hinteren Außenkontur an dem Positionierungsmittel (8) anliegt.

9. Grillaufsatz für eine Gaskochstelle nach einem der Ansprüche 1 bis 8, **dadurch gekennzeichnet, dass** die Grillplatte (1) von einer im Wesentlichen geschlossenen Metallplatte gebildet ist.

10. Grillaufsatz für eine Gaskochstelle nach einem der Ansprüche 1 bis 9, **dadurch gekennzeichnet, dass** eine Unterseite der Grillplatte (1) eben ausgeführt ist.

11. Grillaufsatz für eine Gaskochstelle nach einem der Ansprüche 1 bis 10, **dadurch gekennzeichnet, dass** eine Oberseite der Grillplatte (1) gerippt ausgeführt ist.

12. Gaskochstelle mit einer Grillplatte (1) nach einem der Ansprüche 1 bis 11, **dadurch gekennzeichnet, dass** zum Beheizen der Grillplatte (1) mindestens ein unter der Grillplatte (1) angeordneter Gasbrenner (5) vorgesehen ist.

13. Gaskochstelle nach Anspruch 12, **dadurch gekennzeichnet, dass** mindestens ein Gasbrenner (5) eine unrunde, vorzugsweise eine ovale oder eine längliche Form aufweist.
